# EUROPEAN PATENT APPLICATION

(11) **EP 1 798 061 A2**
(43) Date of publication of application: **20.06.2007**
(21) Application number: 06125718.4
(22) Date of filing: 08.12.2006
(51) Int. Cl.: B60C 9/00

(54) **Pneumatic tire with monofilament reinforcement**

(30) Priority: 14.12.2005 US 750330 P
(71) Applicant: THE GOODYEAR TIRE & RUBBER COMPANY, Akron, Ohio 44316-0001 (US)
(72) Inventor: Maus, Peter Cornelius, B-4760, Bullingen (BE); Susutoglu, Yasar Ahmet Murat, L-7793, Bissen (LU); Beck, Raphael, L-8558, Reichlange (LU)
(74) Representative: Kutsch, Bernd

(57) **Abstract**

A pneumatic tire comprising a carcass structure having at least one carcass ply (12) of reinforcing cords extending between a pair of opposing bead portions (16), a belt structure having at least one ply (22, 24) of parallel cords radially outward of the carcass structure, and a tread (18) radially outward of the belt structure. The cords of at least one of the plies of either the carcass structure or the belt structure are a monofilament cord (30) having a cross-sectional configuration defined by a scalloped circumference.

## Description

### Field of the Invention

The present invention is directed to a pneumatic tire having monofilament reinforcement. More specifically, the present invention is directed to a pneumatic tire having monofilament reinforcement in at least one ply, the monofilament reinforcement having a cross-sectional configuration with increased surface area for improved adhesion.

### Background of the Invention

Monofilament cords have been used in tires for many years. The utility of monofilaments, formed from organic polymers such as nylon, polyester, or rayon, or from steel, have been disclosed by almost all major tire manufacturers. The commercial use of monofilaments in various parts of the tire has also been realized by multiple tire manufacturers. Conventional monofilaments have a round or obround configuration. Due to the cross-sectional configuration, when coated with adhesive and an elastomeric ply coat, the adhesion between the monofilament and the ply coat is predominately a chemical adhesion. This is particularly true for steel monofilaments, as opposed to organic monofilaments that are formed of multiple fiber threads.

### Summary of the Invention

The present invention is directed to a pneumatic tire comprising a monofilament cord having a cross-sectional configuration providing increases adhesion to the coating rubber according to claim 1.

Dependent claims cover preferred embodiments of the invention.

In one aspect of the invention, the monofilament cord is the reinforcing cord in at least one of the carcass plies. In another aspect of the invention, the monofilament cord is the parallel cord in at least one of at least two belt structure plies.

In one further aspect of the invention, the monofilament cord preferably has a circumference defined by evenly spaced and alternating recesses and protrusions. Preferably, the cord has three to ten recesses and an equal number of protrusions; more preferably, the cord has five to eight recesses and an equal number of protrusions.

In another aspect of the invention, each recesses and protrusion of the monofilament cord is preferably defined by a radius at the peak of either the recess or protrusion, wherein the radius of the recess is greater than the radius of the protrusion. Alternatively, the radius of the recess may be approximately equal to the radius of the protrusion.

In another aspect of the invention, the monofilament cord may be formed from either an organic polymer material or from steel.

### Brief Description of the Drawings

The invention will be described by way of example and with reference to the accompanying drawings in which:
FIG. 1 is a perspective view of a pneumatic tire;
FIGS. 2 to 5 are cross-sectional views of alternative embodiments of a tire cord monofilament according to the invention; and
FIG. 6 is a monofilament cross-sectional view.

### Detailed Description of the Invention

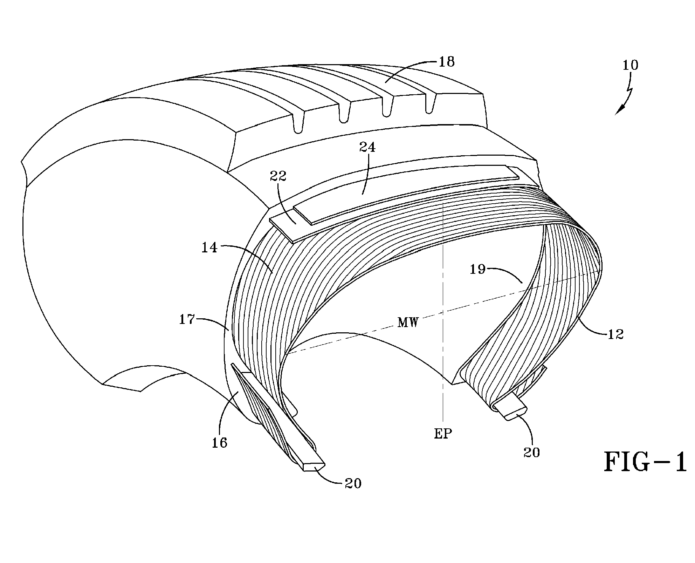

Referring to FIG. 1, the present invention relates to a pneumatic tire 10. The pneumatic tire 10 has a carcass structure including a carcass ply 12 incorporating a plurality of reinforcing cords 14. The carcass structure also includes opposing bead portions 16, sidewalls 17, and an inner liner 19, and excludes the belt structure and tread 18 located radially outward of the carcass structure. In those instances when one desires to utilize the essence of the present invention for larger size tires, two or more carcass plies 12 may be used.

The axially spaced apart annular bead portions 16 of the carcass structure have an annular tensile member 20 wrapped by the carcass ply 12, and are shaped, with or without other reinforcement elements such as flippers, chippers, apexes, toe guards and chafers, to fit the design rim. The carcass ply 12 extends between the bead tensile members 20 and is folded thereabout.

The belt structure has one or preferably at least two belt plies 22, 24. The belt plies 22, 24 are annular layers of parallel cords, underlying the tread 18, unanchored to the bead portions 16, and the cords in the adjacent plies 22, 24 are inclined at equal but opposing angles relative to the equatorial plane EP of the tire, preferably at angles of 17° to 35° relative to the tire equatorial plane EP.

FIG. 1 is merely exemplary of a tire embodiment, illustrating the basic elements of a pneumatic tire 10. A tire designer would readily appreciate that the number of layers in the carcass structure and the belt structure, as well as the number and arrangement of reinforcement layers in the bead portions may vary depending upon the intended end use of the tire. By way of non-limiting example, for a radial medium truck tire, such a tire conventionally has three to four belt plies of angled cords, and may have an additional ply of substantially zero degree cords. Additionally, the exact tread configuration is selected based upon the intended end use and performance characteristics of the tire.

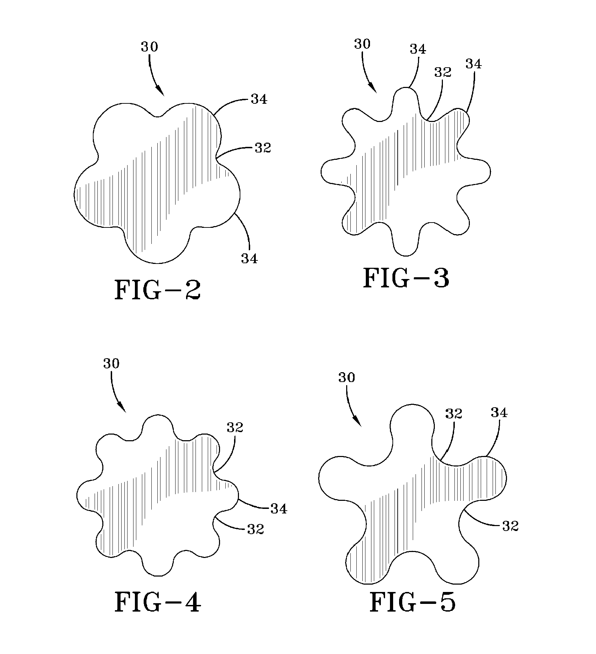

In accordance with the present invention, at least one ply of the tire, either the carcass ply 12 or at least one of the belt plies 22 or 24 is formed of a monofilament cord. Monofilament cords 30 as contemplated herein are illustrated in FIGS. 2 to 5. The monofilament cords 30 have a cross-sectional configuration defined by a scalloped circumference consisting of evenly spaced and alternating recesses 32 and protrusions 34. The recesses 32 and protrusions 34 are preferably spaced such that the arc length C measured between adjacent repeating elements of the monofilament cord 30 is equal along the entire circumference of the monofilament cord 30.

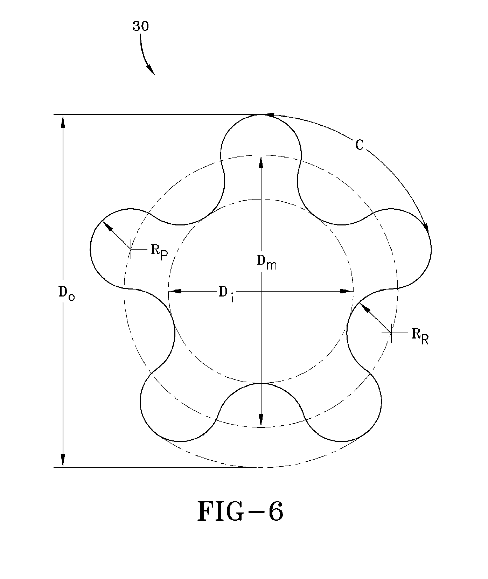

The monofilament cords 30 have an outer diameter D₀ extending between opposing points on a circle formed by the outermost points of the monofilament cord 30, see FIG. 6, and a inner diameter Dᵢ extending between opposing points on a circle formed by the innermost surface points of the monofilament cord 30. The monofilament cord preferably also has what may be defined as a median diameter Dₘ located half way between the outer diameter D₀ and the inner diameter Dᵢ. Relative to the outer diameter D₀, the scalloped circumference may be seen as having only evenly spaced recesses 32, while relative to the inner diameter Dᵢ, the scalloped circumference may be seen as having only evenly spaced protrusions 34. Relative to the median diameter Dₘ, the scalloped circumference has alternating, evenly spaced recesses 32 and protrusions 34. In discussing the overall cross-sectional configuration of the monofilament cords 30, the inventors will refer to the configuration relative to the median diameter; thus the configuration will be referred to as having alternating, evenly spaced recesses 32 and protrusions 34.

Each recess 32 and protrusion 34 is defined by a recess radius R_{R} and a protrusion radius R_{P}, with R_{P} being at the peak of the applicable configuration, see FIG. 6. The recess radius R_{R} and the protrusion radius R_{P} may be approximately equal, as seen in FIG. 6. Alternatively, the recess radius R_{R} and the protrusion radius R_{P} may differ, as seen in FIG. 2 wherein the protrusion radius R_{P} is greater than the recess radius R_{R}, or as seen in FIG. 5 wherein the recess radius R_{R} is greater than the protrusion radius R_{P}.

The scalloped circumference of the monofilament cords 20 may have three to ten recesses 32 and three to ten protrusion 34. Preferably, it has five to eight each of the recesses and protrusions, the recesses 32 and protrusions 34 alternating and evenly spaced about the circumference of the monofilament cord 30. In the monofilament cords 30 of FIGS. 3 and 4, there are eight each of the alternating recesses 32 and protrusions 34, while in the monofilament cords 30 of FIGS. 2, 5, and 6 there are five each of the alternating recesses and protrusions.

The difference between the two monofilament cords 30 of FIGS. 3 and 4 is that the cord 30 of FIG. 3 has a deeper recess 32 than the cord 30 of FIG. 4, creating a greater surface area of the monofilament of FIG. 3 in comparison to that of FIG. 4. Similarly, the cords 30 of FIGS. 5 and 6, while having the same number of recesses 32 and protrusions 34 as the cord 30 of FIG. 2, have a greater surface area than the cord 30 of FIG. 2. In comparison to a conventional round or obround monofilament of the same outer diameter, all of the monofilament cords 30 of the present invention have a greater surface area; this being one of the goals of the invention. The table below shows the comparison of surface area and weight for different cord shapes, all having the same outside diameter, using the round cord as the basis of comparison for the scalloped monofilament.

**Table**

| Cord shape | Round | FIG. 2 | FIG. 3 | FIG. 4 |
|---|---|---|---|---|
| Surface Area | 100 | 107% | 128.5% | 118.6% |
| Cord Weight | 100 | 80.2% | 68.8% | 77.5% |

As evidenced by the data above, the surface area is increased over the conventional round monofilament, and the weight of the cord is also reduced, with the surface area and weight reduction correspondingly increasing for the different shapes of the scalloped monofilaments.

By increasing the surface area of the cord 30, the area for chemical adhesion to the coating rubber is increased, improving the adhesion of the cord in the coating rubber. Additionally, the presence of the recesses 32 in the monofilament cord 30 provides for and improves the mechanical adhesion between the cord 30 and a coating rubber. Thus the inventive cord 30 relies upon both chemical and mechanical adhesion between the cord and a coating rubber to obtain adhesion in the various tire plies in which the monofilament is used.

Suitable organic polymer materials for the present monofilaments, when used in the belt plies of a tire, have a denier of at least 2200 dTex, a tenacity of at least 31 cN/Tex, and a shrinkage of at most 6%. Examples of suitable materials include multiple types of nylon, including but not limited to, nylon 46, nylon 66, nylon 6, and nylon 12, and polyesters such as polyethyleneterephthalate (PET), and polyethylenenapthalate (PEN); and polyvinyl alcohol (PVA).

For tires using the steel to form the monofilament cords 30, the steel monofilament has a tensile strength of at least equal to 4080 MPA - 2000D where D is the overall filament diameter in mm. The overall diameter of the monofilament is in the range of 0.35 to 0.50 mm.

When employed within a ply, the spacing of the monofilament within the ply will be dependant upon the material forming the monofilament 30, the tensile strength of the monofilament, the type of ply into which the monofilament 30 is being incorporated, and the type of tire being constructed.

While not specifically mentioned above, the scalloped monofilament 30 may also be used in other types of tire reinforcing plies such as chafers, flippers, or sidewall reinforcing plies.

Additionally, in forming a tire having plies of the scalloped monofilaments, in either the belt structure or if the carcass structure has multiple reinforcing plies, not all of the plies need be formed using the scalloped monofilaments. By way of example, in a radial medium truck tire having three working angled belt plies, only one or two of the belt plies need by formed from the scalloped monofilaments. Similarly, if the tire is a two-ply carcass structure, only one or both of the plies may be formed of the scalloped monofilaments.

## Claims

1. A pneumatic tire comprising a carcass structure, a belt structure radially outward of the carcass structure, and a tread (18) radially outward of the belt structure, the carcass structure comprising at least one carcass ply (12) of reinforcing cords (14) extending between a pair of opposing bead portions (16), and the belt structure comprising at least one ply (22, 24) with parallel cords, the tire being **characterized by**
the cords of the at least one ply (12) of the carcass structure or the cords of the at least one ply (22, 24) of the belt structure being a monofilament cord (30) having a cross-sectional configuration defined by a scalloped circumference.

2. The tire of claim 1 wherein the circumference of the monofilament cord (30) has a plurality of evenly spaced and alternating recesses (32) and protrusions (34).

3. The tire of claim 1 or 2 wherein the monofilament cord (30) has three to ten recesses (32) and an equal number of protrusions (34).

4. The tire of claim 3 wherein the monofilament cord (30) has five to eight recesses (32) and an equal number of protrusions (34).

5. The tire of at least one of the claims 2 to 4 wherein each recess (32) and protrusion (34) of the monofilament cord (30) is defined by a radius at the peak of either the recess or protrusion, wherein the radius of the recess is greater than the radius of the protrusion.

6. The tire of at least one of the claims 2 to 4 wherein each recess (32) and protrusion (34) of the monofilament cord (30) is defined by a radius at the peak of either the recess or protrusion, wherein the radius of the recess is approximately equal to the radius of the protrusion.

7. The tire of at least one of the previous claims, wherein the belt structure comprises at least two plies (22, 24) of parallel cords.

8. The tire of at least one of the previous claims wherein the monofilament cord (30) is the parallel cords in one of the belt plies (22, 24); and/or wherein the monofilament cord (30) is the reinforcing cord in the at least one carcass ply (12).

9. The tire of at least one of the previous claims wherein the monofilament cord (30) is formed from an organic polymer material.

10. The tire of at least one of the previous claims wherein the monofilament cord (30) is formed of steel.
